# EUROPEAN PATENT APPLICATION

(11) **EP 2 416 174 A1**
(43) Date of publication of application: **08.02.2012**
(21) Application number: 11176465.0
(22) Date of filing: 03.08.2011
(51) Int. Cl.: G01S 13/90, G01S 7/02

(54) **Full-polarimetric synthetic aperture radar and method of transmitting and receiving for the same**

(30) Priority: 03.08.2010 JP 2010174086
(71) Applicant: NEC Corporation, Minato-ku Tokyo (JP)
(72) Inventor: Fujimura, Takashi, Tokyo (JP)
(74) Representative: Betten & Resch

(57) **Abstract**

A full polarimetric synthetic aperture radar (1) includes a first receiver (12) into which a receiving signal of a received horizontal polarization wave is inputted; a second receiver (13) into which a receiving signal of a received vertical polarization wave is inputted; a transmitter (11) which generates a frequency-modulated pulse signal and outputs the frequency-modulated pulse signal; a phase shifter (14) which shifts a phase of the inputted pulse signal alternately by 0 degree and 180 degrees every time when the pulse signal is inputted; a first antenna (15) for receiving horizontal polarization which transmits a transmitting wave of horizontal polarization on the basis of the pulse signal provided by the transmitter (11) or the phase shifter (14) , and which receives a receiving wave of horizontal polarization and outputs the received signal to the first receiver (12); and a second antenna (16) for receiving vertical polarization which transmits a transmitting wave of vertical polarization on the basis of the pulse signal provided by the transmitter (11) or the phase shifter (14), and which receives a receiving wave of vertical polarization and outputs the received signal to the second receiver (13).

## Description

### TECHNICAL FIELD

The present invention relates to a full polarimetric synthetic aperture radar and a method of transmitting and receiving for the radar.

### BACKGROUND ART

In the field of the remote sensing using a flying object such as an artificial satellite and an airplane, four polarizations synthetic aperture radar (Full Polarimetric Synthetic Aperture Radar) using the microwave band is used as a sensor for imaging a state of the ground surface. Now, a transmitting wave includes a horizontal polarized coefficient and a vertical polarized coefficient, and a receiving wave also includes a horizontal polarized coefficient and a vertical polarized coefficient. Hereinafter, the horizontal polarized coefficient and the vertical polarized coefficient are abbreviated as H-Pol and V-Pol respectively. In this case, H-Pol of the receiving wave includes H-Pol, which is received as H-Pol as it is in the case that a wave of H-Pol is transmitted (Horizontal-Horizontal Polarized coefficient which is abbreviated as HH-Pol, hereinafter) and which is received as H-Pol in the case that the wave of V-Pol is transmitted (Vertical-Horizontal Polarized coefficient which is abbreviated as VH-Pol, hereinafter).Similarly, V-Pol of the receiving wave includes V-Pol which is received as V-Pol in the case that a wave of H-Pol is transmitted (Horizontal-Vertical Polarized coefficient which is abbreviated as HV-Pol, hereinafter) and which is received as V-Pol as it is in the case that the wave of V-Pol is transmitted (Vertical -Vertical Polarized coefficient which is abbreviated as VV-Pol, hereinafter). Moreover, in the following description, HH-Pol and VV-Pol are described as a like polarized coefficient (abbreviated as Like-Pol), and HV-Pol and VH-Pol are described as a cross polarized coefficient (abbreviated as Cross-Pol). Furthermore, receiving signals corresponding to H-Pol, V-Pol, HH-Pol, HV-Pol, VH-Pol and VV-Pol are described as H-Signal, V-Signal, HH-Signal, HV-Signal, VH-Signal and VV-Signal respectively.

As an art related to Full-Pol-SAR, Japanese Patent Application Laid-Open No. 2010-085169 is known publicly. According to Full-Pol-SAR described in Japanese Patent Application Laid-Open No. 2010-085169, a transmitting pulse of H-Pol and a transmitting pulse of V-Pol are transmitted alternately. Then, H-Pol of a reflected wave, which is reflected by the ground surface or the like, is received and processed by a H-Pol antenna and a H-Pol receiving system, and V-Pol of the reflected wave is received and processed by a V-Pol antenna and a V-Pol receiving system. That is, two set of the antennas and the receiving systems are used out of which one is for H-Pol and the other is for V-Pol.

In this case, a backscattering signal level of Like-Pol of the reflected wave is larger than one of Cross-Pol. As a result, the related art is caused a problem that, when receiving Cross-Pol of the reflected wave, the range ambiguity (ambiguity) due to the preceding and following Like-Pol becomes strong.

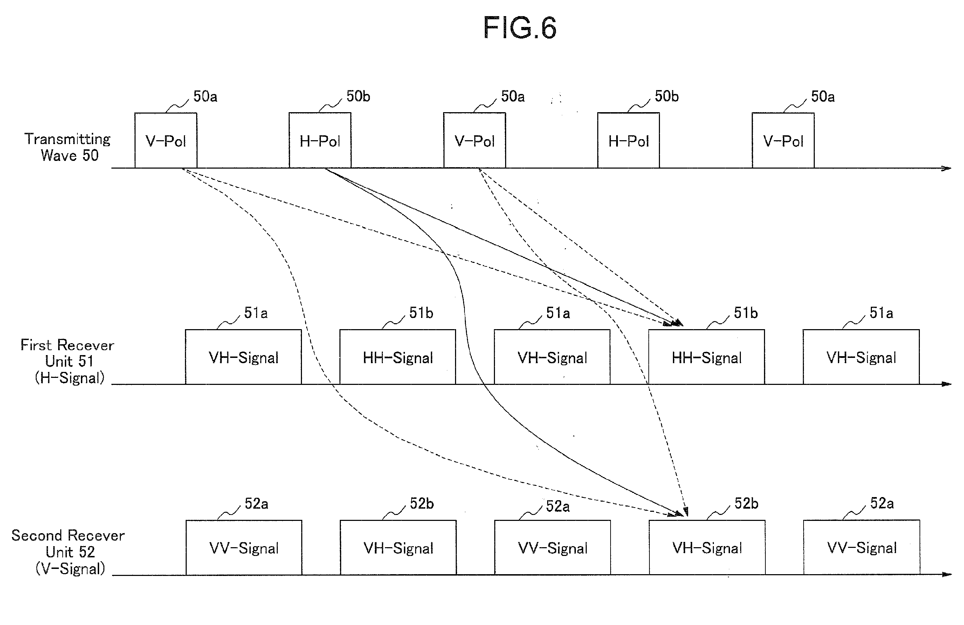

FIG. 6 shows a transmitting wave 50 including a pulse 50a of V-Pol and a pulse 50b of H-Pol which are transmitted alternately to an observation object such as the ground surface, and signal components of VH-Signal 51a, HH-Signal 51b, VV Signal 52a and HV-Signal 52b which are inputted into the two receiving systems (first receiving unit 51 and second receiving unit 52).

HH-Signal 51b corresponding to HH-Pol out of the reflected wave, and VH-Signal 51a corresponding to VH-Pol out of the reflected wave are inputted into the first receiving unit 51. Moreover, VV-Signal 52a corresponding to VV-Pol out of the reflected wave, and HV-Signal 52b corresponding to HV-Pol out of the reflected wave are inputted into the second receiving unit 52. The backscattering signal level of Like-Pol of the reflected wave is larger than the backscattering signal level of Cross-Pol. That is, when receiving Cross-Pol of the reflected wave, the range ambiguity due to Like-Pol which received precedes and follows of this Cross-Pol, becomes strong.

As a result, a problem that S/A (Signal to Ambiguity ratio) of Cross-Pol of the received reflected wave in the range direction becomes degraded is caused.

### SUMMARY

A main object of the present invention is to provide the full polarimetric synthetic aperture radar and the method of transmitting and receiving for the radar which can restrain degradation of S/A of cross-pol of the reflected wave in the range direction.

A full polarimetric synthetic aperture radar includes a first receiver into which a receiving signal of a received horizontal polarization wave is inputted; a second receiver into which a receiving signal of a received vertical polarization wave is inputted; a transmitter which generates a frequency-modulated pulse signal and outputs the frequency-modulated pulse signal; a phase shifter which shifts a phase of the inputted pulse signal alternately by 0 degree and 180 degrees every time when the pulse signal is inputted; a first antenna for receiving horizontal polarization which transmits a transmitting wave of horizontal polarization on the basis of the pulse signal provided by the transmitter or the phase shifter, and which receives a receiving wave of horizontal polarization and outputs the received signal to the first receiver; and a second antenna for receiving vertical polarization which transmits a transmitting wave of vertical polarization on the basis of the pulse signal provided by the transmitter or the phase shifter, and which receives a receiving wave of vertical polarization and outputs the received signal to the second receiver.

### BRIEF DESCRIPTION OF THE DRAWINGS

Exemplary features and advantages of the present invention will become apparent from the following detailed description when taken with the accompanying drawings in which:
FIG. 1 is a block diagram of Full-Pol-SAR according to a first exemplary embodiment of the present invention;
FIG. 2 is a flowchart of Full-Pol-SAR according to the first exemplary embodiment;
FIG. 3 shows components of a transmitting wave and a receiving wave according to the first exemplary embodiment;
Fig. 4 is a block diagram of a SAR unit and a SAR image processing analysis unit according to a second embodiment of the present invention;
FIG. 5 is a block diagram of a timing adjusting circuit according to the second exemplary embodiment; and.
FIG. 6 shows components of a transmitting wave and a receiving wave according to a related art.

### EXEMPLARY EMBODIMENT

An exemplary embodiment according to the present invention will be described in the following.

### [A first embodiment]

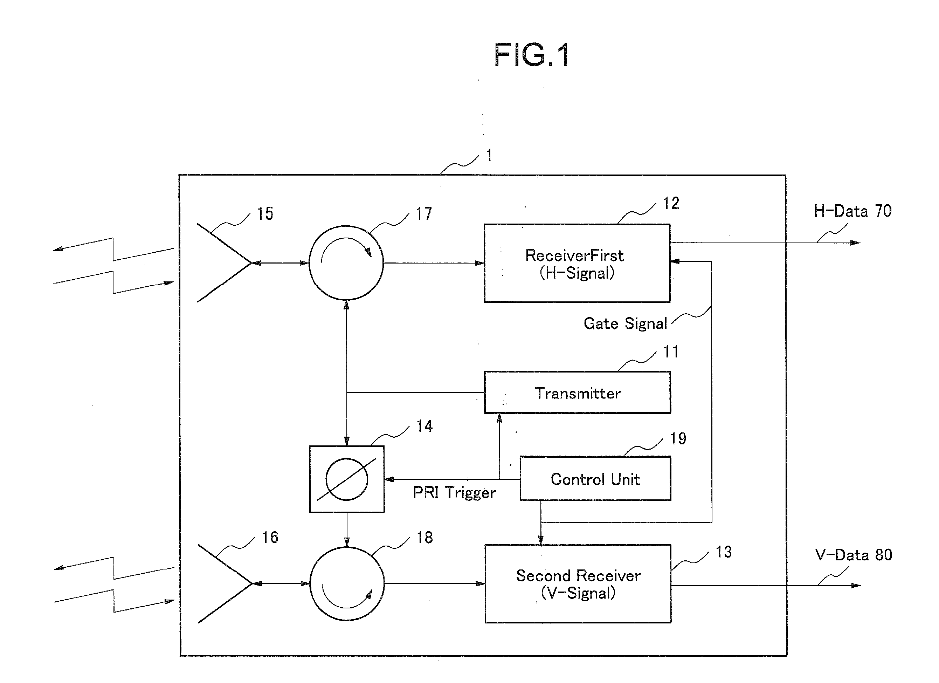

FIG. 1 is a block diagram of Full-Pol-SAR according to a first exemplary embodiment of the present invention.

As shown in FIG. 1, Full-Pol-SAR 1 includes a transmitter 11, a first receiver 12, a second receiver 13, a phase shifter 14, a H-Pol antenna 15, a V-Pol antenna 16, a H-Pol circulator 17, a V-Pol circulator 18 and a control unit 19.

The transmitter 11 generates a transmitting pulse signal which is frequency-modulated. A linear pulse modulator which carries out modulation with linear frequency shift is exemplified as the transmitter 11. The first receiver 12 receives a receiving signal (H-Signal) corresponding to H-Pol included in the reflected wave which is reflected by an observation object. The second receiver 13 receives a receiving signal (V-Signal) corresponding to V-Pol included in the reflected wave which is reflected by the observation object. A usual receiver is applicable to the first receiver 12 and the second receiver 13.

The H-Pol circulator 17 and the V-Pol circulator 18 switch a route between a transmitting route and a receiving route. That is, when transmitting the transmitting pulse signal, the H-Pol circulator 17 and the V-Pol circulator 18 switch the route so that the transmitting pulse signal from the transmitter 11 may be inputted into the H-Pol antenna 15 and the V-Pol antenna 16 respectively. Moreover, when receiving the pulse signal, the H-Pol circulator 17 and the V-Pol circulator 18 switch the route so that receiving signals from the H-Pol antenna 15 and the V-Pol antenna 16 are inputted into the first receiver 12 and the second receiver 13 respectively.

The H-Pol antenna 15 and the V-Pol antenna 16 transmit H-Pol and V-Pol respectively, and receive H-Pol and V-Pol respectively.

The phase shifter 14 shifts a phase of the transmitting pulse signal by a predetermined angle every time when the phase shifter 14 is provided with the transmitting pulse signal from the transmitter 11. That is, the pulse, which is provided from the transmitter 11, is inputted into the H-Pol antenna 15 and the V-Pol antenna 16 via the H-Pol circulator 17 and the V-Pol circulator 18 respectively. The phase shifter 14, which is arranged between the transmitter 11 and the V-Pol circulator 18, shifts the phase alternately by 0 degree and by 180 degrees every time when the transmitting pulse signal is inputted to the phase shifter 14 according to a trigger signal of a PRI (Pulse Repetition Interval) signal which the control unit 19 generates. The control unit 19 generates the PRI signal, a gate signal for receiving or the like at any timing to control working timing of the first receiver 12, the second receiver 13, the phase shifter 14, the transmitter 11 and the like.

Consequently, H-Pol is transmitted from the H-Pol antenna 15. Moreover, +V-Pol and -V-Pol, whose phases are shifted by 0 degree and by 180 degrees from H-Pol respectively, are transmitted alternately from the V-Pol antenna 16. H-Pol which relative phase difference from V-Pol is 0 degree, and H-Pol which relative phase difference from V-Pol is 180 degrees are denoted as +H-Pol and -H-Pol respectively. That is, as the result, two kinds of linear polarizations, which are crossed at a right angle each other and whose polarization planes are inclined by +45 degrees and by -45 degrees to H-Pol respectively, are transmitted alternately to the observation object from the H-Pol antenna 15 and the V-Pol antenna 16.

Hereinafter, a transmitting pulse including H-Pol and +V-Pol (H-Pol + V-Pol) is denoted as +45-Pol, and a transmitting pulse of H-Pol and -V-Pol (H-Pol - V-Pol) is denoted as -45-Pol.

While the phase shifter 14 is arranged between the transmitter 11 and the V-Pol circulator 18 to be connected to the transmitter 11 and the V-Pol circulator 18 according to the exemplary embodiment, it may be preferable that the phase shifter 14 is arranged between the transmitter 11 and the H-Pol circulator 17 to be connected to the transmitter 11 and the H-Pol circulator 17. In this case, V-Pol is transmitted from the V-Pol antenna 16, and +H-Pol and -H-Pol, whose phase are shifted by 0 degree and by 180 degrees respectively every time when the transmitting pulse is inputted, are transmitted alternately from the H-Pol antenna 15.

The receiving signals, which are provided by the H-Pol antenna 15 and the V-Pol antenna 16, are inputted into the first receiver 12 and the second receiver 13 via the H-Pol circulator 17 and the V-Pol circulator 18 respectively. Each of the first receiver 12 and the second receiver 13 converts the receiving signal into digital data. The converted receiving signals are denoted as H-Data 70 and V-Data 80.

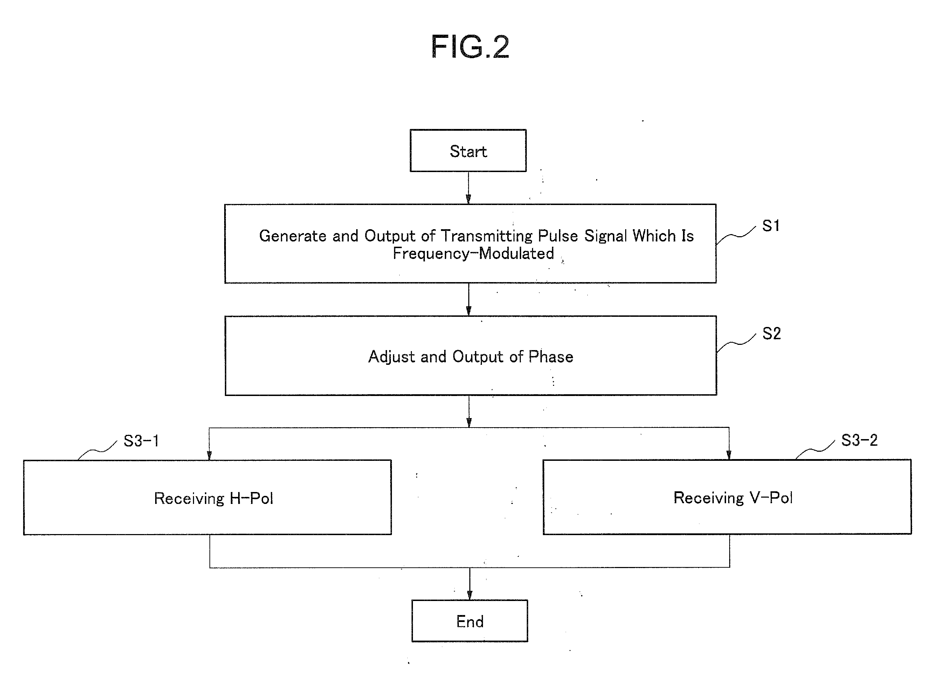

FIG. 2 is a flowchart showing an operation of Full-Pol-SAR mentioned above. First, the transmitter 11 generates the transmitting pulse signal which is frequency-modulated, and provides the circulator 17 and the phase shifter 14 with the transmitting pulse signal (S1). The phase shifter 14 shifts the phase of the transmitting pulse signal alternately by 0 degree and by 180 degrees every time when the transmitting pulse signal is inputted, and inputs the phase-Shifted transmitting pulse signal into the circulator 18. Then, the pulse signal, which is provided by the circulator 17, is transmitted from the H-Pol antenna 15. Meanwhile, the pulse signal, whose phase the circulator 18 shifts alternately by 0 degree and by 180 degrees, is transmitted from the V-Pol antenna 16 (S2). The above is the transmitting process.

Next, the H-Pol antenna 15 receives H-Pol, and provides the first receiver 12 with the received H-Pol via the circulator 17 (S31). Moreover, the V-Pol antenna 16 receives V-Pol, and provides the second receiver 13 with the received V-Pol via the circulator 18 (S3-2). The above is the receiving process. While FIG. 2 shows that the receiving process follows the transmitting process, it may be preferable that the transmitting process and the receiving process are carried out simultaneously.

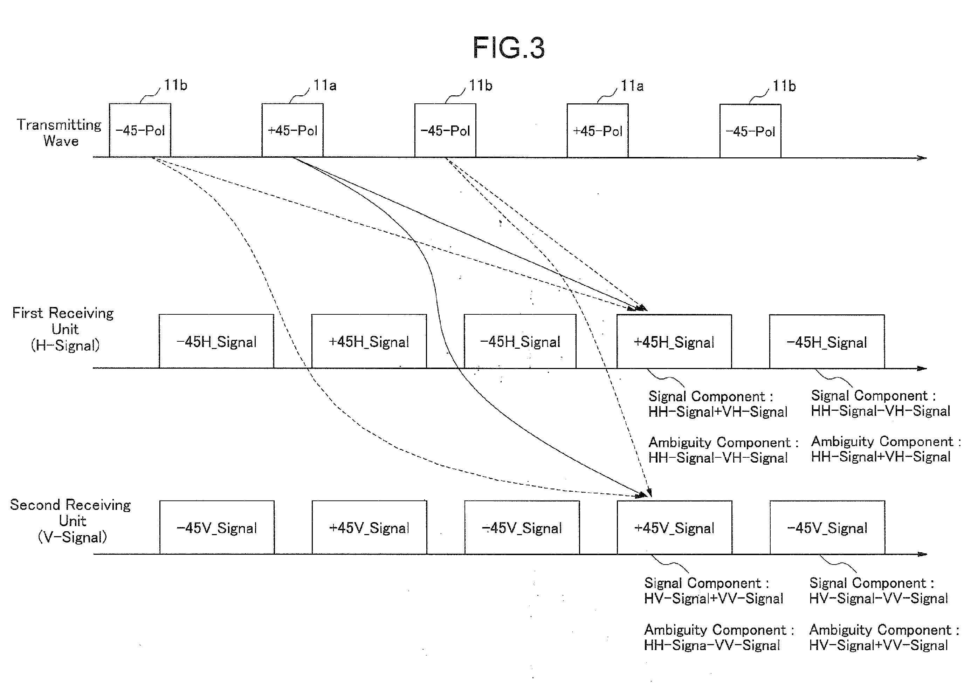

FIG. 3 shows receiving signals which are received by the first receiver 12 and the second receiver 13 in the case that a transmitting pulse, which includes a pulse 11 a of +45-Pol and a pulse 11b of -45-Pol alternately in the time domain, is transmitted. As described in the figure, in the case that +45-Pol out of the transmitting wave is reflected and received, a receiving signal corresponding to H-Pol out of the receiving wave is denoted as +45H-Signal 12b. Meanwhile, in the case that -45-Pol out of the transmitting wave is reflected and received, a receiving signal corresponding to H-Pol out of the receiving wave is denoted as -45H-Signal 12a. Moreover, in the case that +45-Pol out of the transmitting wave is reflected and received, a receiving signal corresponding to V-Pol out of the receiving wave is denoted as +45V-Signal 13b. Meanwhile, in the case that -45-Pol out of the transmitting wave is reflected and received, a receiving signal corresponding to V-Pol out of the receiving wave is denoted as -45V-Signal 13a. Since the phase of the transmitting wave changes for each transmitting pulse as mentioned above, the pulse of +45-Pol and the pulse of -45-Pol are transmitted alternately. The receiving signal corresponding to H-Pol out of the reflected wave, which is reflected by the observation object, is inputted into the first receiver 12, and the receiving signal corresponding to V-Pol out of the reflected wave is inputted into the second receiver 13.

The receiving signal (+45H-Signal = HH-Signal + VH-Signal), which is corresponding to H-Pol of the received reflected wave of +45-Pol included in the transmitting wave, is inputted into the first receiver 12. Moreover, the receiving signal (-45H-Signal= HH-Signal - VH-Signal), which is corresponding to H-Pol of the received reflected wave of -45-Pol included in the transmitting wave, is inputted into the first receiver 12. At this time, the ambiguity component is the receiving signal (HH-Signal - VH-Signal) which precedes and follows the receiving signal HH-Signal + VH-Signal corresponding to the received HH-Pol + VH-Pol. The backscattering signal level in this case is smaller that one which is corresponding to difference between Like-Pol and Cross-Pol according to Japanese Patent Application Laid-Open No. 2010-085169.

For this reason, the reflected wave, which includes HH-Pol + VH-Pol as the signal component and HH-Pol - VH-Pol as the ambiguity component, has smaller range ambiguity than the reflected wave which includes Like-Pol and Cross-Pol has. That is, S/A of Cross-Pol of the received reflected wave in the range direction is improved.

### [A second exemplary embodiment]

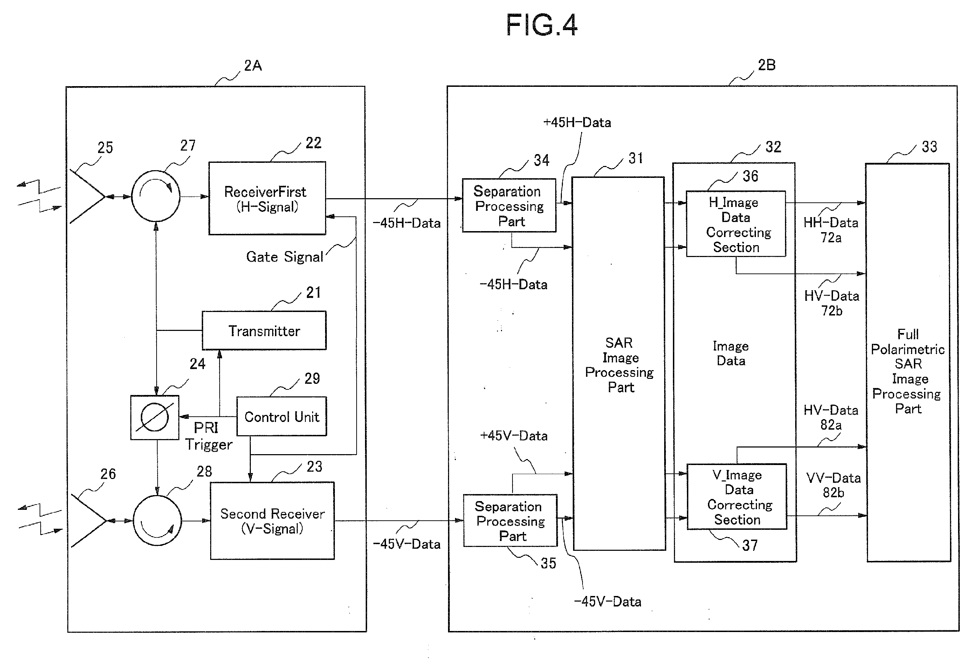

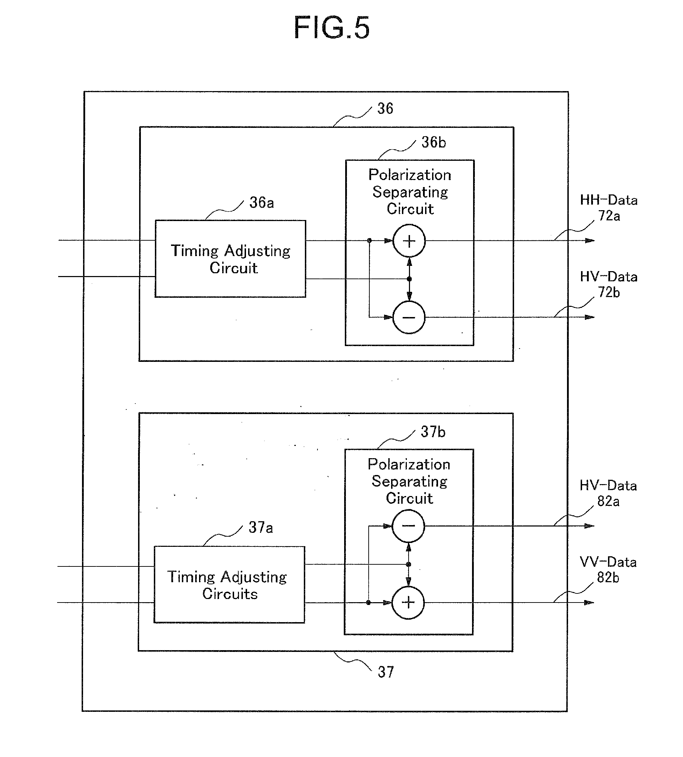

Next, a second exemplary embodiment of the present invention will be described. FIG. 4 is a block diagram of Full-Pol-SAR 2 according to the exemplary embodiment. The Full-Pol-SAR 2 includes a SAR unit 2A and a SAR image processing analysis unit 2B. The SAR unit 2A has a component corresponding to the component of Full-Pol-SAR 1 according to the first exemplary embodiment, and the corresponding component of the SAR unit 2A has the same function as the component of Full-Pol-SAR 1. That is, the SAR unit 2A includes a transmitter 21, a phase shifter 24, a first receiver 22, a second receiver 23, a H-Pol antenna 25, a V-Pol antenna 26, a H-Pol circulator 27, a V-Pol circulator 28 and a control part 29. Moreover, the transmitter 21, the phase shifter 24, the first receiver 22, the second receiver 23, the H-Pol antenna 25, the V-Pol antenna 26, the H-Pol circulator 27, the V-Pol circulator 28 and the control part 29 are corresponding to the transmitter 11, the phase shifter 14, the first receiver 12, the second receiver 13, the H-Pol antenna 15, the V-Pol antenna 16, the H-Pol circulator 17, the V-Pol circulator 18 and the control unit 19 respectively The SAR image processing analysis unit 2B includes a SAR image processing part 31, an image data correcting part 32, a full polarimetric SAR image processing part 33 and separation processing parts 34 and 35. The separation processing part 34 separates H-Data 70, which is provided by the SAR unit 2A, into +45H-Data 71a and -45H-Data 71b. The separation processing part 35 separates V-Data 80, which is provided by the SAR unit 2A, into +45V-Data 81a and -45H-Data 81b. The SAR image processing part 31 processes a SAR image on the basis of +45H-Data 71a, -45H-Data 71b, +45V-Data 81a and -45H-Data 81b. The image data correcting part 32 includes a H_image data correcting section 36 to carry out data correction of the SAR image which is based on +45H-Data 71a and -45H-Data 71b, and a V_image data correcting section 37 to carry out data correction of the SAR image which is based on +45V-Data 81a and-45H-Data 81b. As shown in FIG. 5, the H_image data correcting section 36 and the V_image data correcting section 37 include timing adjusting circuits 36a and 37a and polarization separating circuits 36b and 37b. The full polarimetric SAR image processing part 33 processes a SAR image on the basis of the corrected data which is provided by the image data correcting part 32.

That is, H-Data 70, which the first receiver 22 outputs, is inputted into the separation processing part 34 of the SAR image processing analysis unit 2B. H-Data 70, which is inputted into the separation processing part 34, is separated into +45H-Data 71a and -45H-Data 71b for each transmitting pulse, and +45H-Data 71a and -45H-Data 71b are inputted into the SAR image processing part 31.

Moreover, V-Data 80, which the second receiver 23 outputs, is inputted into the separation processing part 35 of the SAR image processing analysis unit 2B. V-Data 80, which is inputted into the separation processing part 35, is separated into +45V-Data 81a and -45V-Data 81b for each transmitting pulse, and +45V-Data 81a and -45V-Data 81b are inputted into the SAR image processing part 31. As mentioned above, it is enough that the separation processing part 34 separates H-Data 70 into ±45H-Data, and the separation processing part 35 separates V-Data 80 into ±45V-Data. As a result, a usual separation processing part is applicable to the separation processing parts 34 and 35.

As mentioned above, +45H-Data 71a and -45H-Data 71b which are provided by the separation processing part 34, and +45V-Data 81a and -45V-Data 81b which are provided by the separation processing part 35 are inputted into the SAR image processing part 31. The processed four kinds of the SAR images are inputted into the image data correcting part 32 to be stored temporarily in a memory (not shown in the figure) of the image data correcting part 32 .

Between the SAR images, which are corresponding to +45-Pol and -45-Pol, out of four kinds of SAR images stored in the memory, there exists timing difference by one pulse interval.

Then, the timing adjusting circuits 36a and 37a adjust the timing difference. A usual timing adjusting circuit is applicable to the timing adjustment.

Then, the corrected data is inputted to the polarization separating circuits 36b and 37b, and the polarization separating circuits 36b and 37b carry out a polarization separating process which will be described later. Then, the polarization separating circuit 36b outputs HH-Data 72a and VH-Data 72b in the polarization separating process and provides the full polarimetric SAR image processing part 33 with HH-Data 72a and VH-Data 72b. The polarization separating process circuit 37b outputs HV-Data 82a and VV-Data 82b in the polarization separating process and provides the full polarimetric SAR image processing part 33 with HV-Data82a and VV-Data82b. The full polarimetric SAR image processing part 33 processes the full polarimetric SAR image on the basis of these data. A general purpose apparatus, which processes the SAR image on the basis of HH-Data 72a, VH-Data 72b, HV-Data 82a and VV-Data82b, is enough as the full polarimetric SAR image processing part 33.

Here, the polarization separating process, which are carried out by the polarization separating circuits 36b and 37b, will be described in detail. The polarization separating process for H-Pol and V-POI, which is carried out in the case that a general transmitting wave including the transmitting pulse of H-Pol and the transmitting pulse of V-Pol alternately in the time domain is transmitted, will be described firstly.

The received H-Pol and V-Pol are separated into four kinds of data, that is, HH-Data, HV-Data, VH-Data and VV-Data.
HH-Data:Dh1=HHs+VHa ... (1)
HV-Data:Dh2=HVs+VVa ... (2)
VH-Data:Dv1=VHs+HHa ... (3)
VV-Data:Dv2=VVs+HVa ... (4)
where HHs, HVs, VHs and VVs mean the signal components and HHa, HVa, VHa and VVa mean the ambiguity components. Four SAR images are obtained through the SAR image processing being made on the basis of each of four kinds of data. In this case, there exists timing difference between the SAR image (HH-Pol and HV-Pol) based on H-Data (HH-Data and HV-Data), and the SAR image based on V-Data (VH-Data and VV-Data) by one pulse interval. Therefore the timing difference is compared by timing adjusting processing.

On the other hand, in this second exemplary embodiment, the timing adjusting circuits 36a and 37a adjust the timing difference. The polarization separating circuits 36b and 37b operate addition and subtraction of HH-Data 72a, VH-Data 72b, HV-Data 82a and VV-Data82b which are timing-adjusted. Then the timing adjusting can be used as by the previous general timing adjusting processing. As a result, signal components and ambiguity components of +45H-Pol,-45H-Pol, +45V-Pol and -45V-Pol are indicated by the formulas (5) to (8) respectively.
+45H-Data:Dp1= (HHs+VHs) + (HHa-VHa) ... (5)
+45V-Data:Dp2= (HVs+VVs) + (HVa-VVa) ... (6)
-45H-Data:Dm1= (HHs-VHs) + (HHa+VHa) ... (7)
-45V-Data:Dm2= (HVs-VVs) + (HVa+VVa) ... (8)

In this point of time, an average value of addition and an average value of subtraction of the formula (5) and the formula (7), and an average value of addition and an average value of subtraction of the formula (6) and the formula (8)are calculated after correcting a phase error between the polarizations. For example, the average value of addition of the formula (5) and the formula (7) is (Dp1+Dm1) /2. The respective results are indicated by the formulas (9) to (12).
(Dp1+Dm1)/2=HHs+HHa ... (9)
(Dp1-Dm1)/2=VHs-VHa ... (10)
(Dp2+Dm2)/2=HVs+HVa ... (11)
(Dp2-Dm2)/2=VVs-VVa ... (12)
where HHs, HVs, VHs and VVs mean the signal components and HHa, HVa, VHa and VVa mean the ambiguity components. Each parameter is complex number.

As shown in the formulas (9) to (12), separation into HH-Data, VH-Data, VV-Data and VH-Data is possible through calculating addition and subtraction of the formula (5) and the formula (7), and calculating addition and subtraction of the formula (6) and the formula (8). For example, HH-Data is obtained through adding Dpl of +45H-Data, and Dm1 of +45V-Data (Dp1+Dm1). Moreover, the signal component becomes the same as the ambiguity component.

According to the exemplary embodiment, for example, in the case of receiving +45H-Signal 12b corresponding to +45H-Pol, the range ambiguity of -45H-Signal 12a corresponding to -45H-Pol, which precedes and follows +45H-Signal 12b, is mixed before the polarization separating process, as shown in FIG 3. However, by virtue of carrying out the polarization separating process, HH-Data 72a, HV-Data 72b, VH-Data 82a and VV-Data 82b include only range ambiguity whose polarization is the same as one of the signal.

In this case, the range ambiguity due to difference in the backscattering signal level becomes smaller than the range ambiguity, which is generated in the case that the signal is Cross-Pol and the ambiguity is Like-Pol, since the signal component and the ambiguity component have the same polarization. Therefore, it is possible to improve S/A in comparison with FULL-Pol-SAR described in Japanese Patent Application Laid-Open No. 2010-085169.

While the transmitting pulse is switched alternately between +45-Pol and -45-Pol through the phase shifter 24' shifting the phase alternately by 0 degree and by 180 degrees according to the exemplary embodiment, it is enough that the phase difference is 180 degrees. For example, it is possible to transmit a right-hand circular polarization and a left-hand circular polarization alternately through the phase shifter 24' shifting the phase by +90 degrees and by -90 degrees.

The relational formulas in this case are indicated by the formulas (13) to (20), where "j" means imaginary number, and each parameter is complex number. Moreover, LcH-Data means receiving data of the horizontal polarization component of the received left-hand circular polarization of the transmitting wave, and LcV-Data means receiving data of the vertical polarization component of the received left-hand circular polarization of the transmitting wave, and RcH-Data means receiving data of the horizontal polarization component of the received right-hand circular polarization of the transmitting wave, and RcV-Data means receiving data of the vertical polarization component of the received right-hand circular polarization of the transmitting wave.
LcH-Data:D11= (HHs+j·VHs) + (HHa-j·VHa)... (13)
LcV-Data:D12= (HVs+j·VVs) + (HVa-j·VVa) ... (14)
RcH-Data:Dr1= (HHs-j·VHs) + (HHa+j·VHa) ... (15)
RcV-Data:Dr2= (HVs-j·VVs) + (HVa+j·VVa) ... (16)
(D11+Dr1)/2 =HHs+HHa ... (17)
(D11-Dr1)/(2·j)=VHs-VHa ... (18)
(D12+Dr2)/2 =HVs+HVa ... (19)
(D12-Dr2)/(2·j)=VVs-VVa ... (20)

While the antenna is used for transmitting and receiving according to the exemplary embodiment, it may be preferable that two antennas are used out of which one is for transmitting and the other is for receiving. It may be preferable, for example, that a transmitting antenna for +45-Pol and a transmitting antenna for -45-Pol are used for transmitting, and an antenna for H-Pol and an antenna for V-Pol are used for receiving.

It may be preferable that the polarizations of the transmitting wave are H-Pol and V-Pol, and the polarizations of the receiving wave are +45-Pol and -45-Pol. It is enough that transmitting pulses whose polarizations are the same as two kinds of polarizations of a receiving wave, and transmitting pulses whose polarizations are at a right angle to two kinds of polarizations of the receiving wave are transmitted alternately within the same pulse interval.

It may be preferable that a configuration using a phased array antenna is applied as the configuration of the antenna.

While the embodiment of the present invention has been described above, the present invention is not limited to the above description, and various changes are possible without departing from the scope of the present invention. The previous description of embodiments is provided to enable a person skilled in the art to make and use the present invention. Moreover, various modifications to these exemplary embodiments will be readily apparent to those skilled in the art, and the generic principles and specific examples defined herein may be applied to other embodiments without the use of inventive faculty. Therefore, the present invention is not intended to be limited to the exemplary embodiments described herein but is to be accorded the widest scope as defined by the limitations of the claims and equivalents. Further, it is noted that the inventor's intent is to retain all equivalents of the claimed invention even if the claims are amended during prosecution.

## Claims

1. A full polarimetric synthetic aperture radar, comprising:
a first receiver into which a receiving signal of a received horizontal polarization wave is inputted;
a second receiver into which a receiving signal of a received vertical polarization wave is inputted;
a transmitter which generates a frequency-modulated pulse signal and outputs the frequency-modulated pulse signal;
a phase shifter which shifts a phase of the inputted pulse signal alternately by 0 degree and 180 degrees every time when the pulse signal is inputted;
a first antenna for receiving horizontal polarization which transmits a transmitting wave of horizontal polarization on the basis of the pulse signal provided by the transmitter or the phase shifter, and which receives a receiving wave of horizontal polarization and outputs the received signal to the first receiver; and
a second antenna for receiving vertical polarization which transmits a transmitting wave of vertical polarization on the basis of the pulse signal provided by the transmitter or the phase shifter, and which receives a receiving wave of vertical polarization and outputs the received signal to the second receiver.

2. A full polarimetric synthetic aperture radar according to claim 1, wherein
the phase shifter shifts the phase of the pulse signal alternately by 180 degrees every time when the pulse signal is inputted, and outputs the phase-shifted pulse signal to the first antenna.

3. A full polarimetric synthetic aperture radar according to claim 1, wherein
the phase shifter shifts the phase of the pulse signal alternately by 180 degrees every time when the pulse signal is inputted, and outputs the phase-shifted pulse signal to the second antenna.

4. A full polarimetric synthetic aperture radar according to any one of claim 1 to claim 3, further comprising:
a SAR image processing unit which processes a SAR image on the basis of data which are provided by the first receiver and the second receiver;
an image data correcting unit which carries out a process for correcting data of the processed SAR image; and
an full polarimetric SAR image processing unit which generates the full polarimetric SAR image on the basis of data corrected by the image data correcting unit.

5. A transmitting and receiving method of a full polarimetric synthetic aperture radar, comprising:
a pulse outputting step to generate and output a pulse signal which is frequency-modulated;
a transmitting step in which a first antenna for receiving horizontal polarization outputs a transmitting wave which includes a horizontal polarization component, and a second antenna for receiving vertical polarization outputs a transmitting wave which includes a vertical polarization component whose phase is shifted alternately by 180 degrees every time when the pulse signal is generated;
a step to provide a first receiver with a receiving signal corresponding to a horizontal polarization component of a receiving wave; and
a step to provide a second receiver with a receiving signal corresponding to a vertical polarization component of the receiving wave.

6. A transmitting and receiving method of a full polarimetric synthetic aperture radar, comprising:
a pulse outputting step to generate and output a pulse signal which is frequency-modulated;
a transmitting step in which a second antenna for receiving vertical polarization outputs a transmitting wave which includes a vertical polarization component, and a first antenna for receiving horizontal polarization outputs a transmitting wave which includes a horizontal polarization component whose phase is shifted alternately by 180 degrees every time when the pulse signal is generated;
a step to provide a first receiver with a receiving signal corresponding to a horizontal polarization component of a receiving wave; and
a step to provide a second receiver with a receiving signal corresponding to a vertical polarization component of the receiving wave.

7. A transmitting and receiving method of full polarimetric synthetic aperture radar according to claim 5 or claim 6, further comprising:
a step to process a SAR image on the basis of receiving data corresponding to the horizontal polarization component, and receiving data corresponding to the vertical polarization component;
a step to carry out a process for correcting data of the processed SAR image; and
a step to process the full polarimetric SAR image on the basis of the data which is corrected in the process for correcting data.
